# EUROPEAN PATENT SPECIFICATION

(11) **EP 4 273 419 B1**
(45) Date of publication and mention of the grant of the patent: **07.05.2025**
(21) Application number: 22770646.2
(22) Date of filing: 18.03.2022
(51) Int. Cl.: F16F 13/00, F16F 9/04

(54) **AIR SPRING AND RAILWAY VEHICLE**
LUFTFEDER UND SCHIENENFAHRZEUG
RESSORT PNEUMATIQUE ET VÉHICULE FERROVIAIRE

(30) Priority: 19.03.2021 CN 202110294179
(43) Date of publication of application: 08.11.2023
(73) Proprietor: Qingdao Borui Zhiyuan Anti-Vibration Technology Co., Ltd., Qingdao, Shandong 266000 (CN)
(72) Inventor: ZHANG, Bo, Qingdao, Shandong 266000 (CN); WANG, Guodong, Qingdao, Shandong 266000 (CN); LIU, Zhiguo, Qingdao, Shandong 266000 (CN); LIU, Wanqiang, Qingdao, Shandong 266000 (CN); SU, Peng, Qingdao, Shandong 266000 (CN)
(74) Representative: J A Kemp LLP
(86) International application number: PCT/CN2022/081824
(87) International publication number: WO 2022/194294

(56) References cited:
- EP-B1- 0 814 279
- CN-A- 101 067 432
- CN-A- 105 736 626
- CN-A- 108 518 441
- CN-A- 108 518 441
- CN-A- 110 481 259
- CN-A- 110 588 697
- DE-A1- 102004 013 690
- JP-A- 2002 079 940

## Description

The present application claims the priority benefit of Chinese application No. 202110294179.6, filed on March 19, 2021, entitled "Electromagnetic levitation air spring and rail vehicle".

### TECHNICAL FIELD

The present application belongs to the technical field of anti-vibration of rail vehicles, and particularly relates to an air spring and a rail vehicle.

### BACKGROUND OF THE PRESENT INVENTION

An air spring is mounted between a vehicle body and a bogie to transfer vertical load, transverse load and torque etc., absorb vertical and transverse vibration and provide a horizontal restoring force, and has a great impact on the stability and comfort of the vehicle.

In the prior art, the air spring usually adopts the manner of a diaphragm connecting in series with an auxiliary spring, so that the anti-vibration effect is achieved by air compression in the diaphragm and rubber deformation of the auxiliary spring. An air spring mainly includes an upper cover, a diaphragm and an auxiliary spring, wherein the upper cover is located below the vehicle body or bolster to realize sealing and load transfer; and the auxiliary spring is located below the diaphragm. In a state where the air spring is inflated normally, the diaphragm plays a primary role in anti-vibration. The performance of the air spring mainly depends on the performance of the diaphragm. The auxiliary spring is used in an emergency state where the air spring is deflated. The anti-vibration mode in which the air spring adopting the manner of a diaphragm connecting in series with an auxiliary spring is a passive anti-vibration mode to absorb vibration, so the anti-vibration performance is poor. In addition, since the auxiliary spring is in a constant operating state, the load borne by the auxiliary spring changes greatly, and the service life is short, thereby seriously affecting the operation reliability of the vehicle.

CN110481259A discloses a magnetic energy suspension actuator, comprising a magnetic suspension, a flange bracket, a first diaphragm, a mounting plate, a first clamp, a sealing ring, a second diaphragm, a second clamp, a connecting sleeve, a connecting ring and a magnetic suspension actuator; the magnetic suspension comprises a flange, an end cover, a permanent magnet ring, an iron core, a bottom shell, a locking nut, a coil holder, a suspension excitation coil, a locking piece, a permanent magnet sheet and an armature.

### SUMMARY OF THE PRESENT INVENTION

According to the present invention, there is provided with an air spring as defined in the independent claim.

Optionally, the air spring further includes an auxiliary spring, and the auxiliary spring includes a first rubber pad arranged in the air chamber and detachably fixed to the cover plate.

Optionally, the auxiliary spring further includes a second rubber pad; a first mounting member is arranged on the support part, a second accommodating chamber is formed between the base and the first mounting member, and the second rubber pad is arranged in the second accommodating chamber.

Optionally, the detection module further includes a second load sensor and a second height sensor; the first mounting member is arranged above the base, and the first mounting member is connected to the cover plate; the second load sensor is arranged on the base and comes into contact with the second rubber pad; and, the second height sensor is configured to measure a height difference between the cover plate and an upper portion of the base.

Optionally, the auxiliary spring further includes a third rubber pad; a second mounting member is arranged on the support part; the second mounting member is arranged below the base and forms a third accommodating chamber with the base; and, the third rubber pad is arranged in the third accommodating chamber.

Or optionally, the auxiliary spring further includes a second rubber pad; a first mounting member is movably connected with the support part, a second accommodating chamber is formed between the base and the first mounting member, and the second rubber pad is located in the second accommodating chamber; wherein an upper portion of the second rubber pad is fixedly connected with the first mounting member, and a lower portion of the second rubber pad is fixedly connected with the base. Optionally, the auxiliary spring further includes a third rubber pad; a second mounting member is movably connected with the support part, the second mounting member is arranged below the base and forms a third accommodating chamber with the base, and the third rubber pad is located in the third accommodating chamber; wherein an upper portion of the third rubber pad is fixedly connected with the base, while a lower portion of the third rubber pad is fixedly connected with the second mounting member.

Or optionally, the detection module includes a third load sensor; a third mounting member is arranged on the support part and located below the base; a fourth rubber pad is located between the base and the third mounting member; the third load sensor is arranged on the third mounting member and comes into contact with the fourth rubber pad; and, a third height sensor is configured to measure a height difference between the cover plate and the bottom of the base.

Optionally, the auxiliary spring further includes a fifth rubber pad arranged below the support part at intervals; and, the fifth rubber pad is connected to a bogie through a mounting seat. A first distance between the support part and the fifth rubber pad is less than a second distance between the cover plate and the base.

Optionally, a support seat is connected above the first rubber pad, and a friction piece with a friction force less than that of the first rubber pad is arranged above the support seat.

A second aspect of the present application provides a rail vehicle, including the air spring described above.

Compared with the prior art, the present application has the following advantages and positive effects.
1. The air spring provided in at least one implementation of the present application has an active anti-vibration function, and can realize the active anti-vibration function in the vertical direction through the logical calculation of the electromagnetic control module, so that the vertical vibration of the vehicle body is finally controlled.
2. The air spring provided in at least one implementation of the present application has almost all the properties of conventional air springs, and is advantageous over conventional air springs. In the horizontal direction, under the joint action of the electromagnetic force, the diaphragm and the second rubber pad, the horizontal torsional load is transferred, and the horizontal torsional displacement is borne. In addition, the firs height sensor can replace the height valve in prior art to control the inflation and deflation of the diaphragm.
3. The air spring provided in at least one implementation of the present application has a safety design function in a failure mode, can bear the load by connecting in series the first rubber pad and the third rubber pad or the first rubber pad and the second rubber pad, and has lower rigidity and better anti-vibration effect.
4. In the air spring provided in at least one implementation of the present application, the auxiliary spring has high reliability, and only the second rubber pad operates in a normal state and jointly acts with the electromagnetic force, so that the load change is small. The first rubber pad and the third rubber pad bear the load in the failure state, and do not bear any load in the normal state. The auxiliary spring has the characteristics of long service life and low failure rate.

### BRIEF DESCRIPTION OF THE DRAWINGS

FIG. 1 is a schematic diagram of an air spring in an implementation;
FIG. 2 is a schematic diagram of an air spring in an implementation; and
FIG. 3 is a schematic diagram of an air spring in an implementation;
in which: 1 upper cover; 2 lower cover; 21 cover plate; 22 support part; 221 first accommodating chamber; 222 groove; 3 diaphragm; 31 air chamber; 4 base; 41 support portion; 411 first mounting member; 412 second mounting member; 413 third mounting member; 51 first coil; 52 second coil; 61 first load sensor; 62 first height sensor; 63 second load sensor; 64 second height sensor; 65 third load sensor; 66 third height sensor; 71 first rubber pad; 72 second rubber pad; 73 third rubber pad; 74 fourth rubber pad; 75 fifth rubber pad; 76 mounting seat; 8 friction piece; and, 9 support seat.

### DETAILED DESCRIPTION OF THE PRESENT INVENTION

The technical solutions of the present application will be described in detail below in combination with specific embodiments. However, it should be understood that elements, structures and features in one embodiment may also be advantageously incorporated into other embodiments without further description.

In the description of the present application, it should be noted that terms such as "first" and "second" are used for descriptive purposes only, and cannot be understood as indicating or implying the relative importance, or implicitly indicating the number of indicated technical features. Therefore, the features defined with "first" and "second" may explicitly or implicitly include one or more of these features.

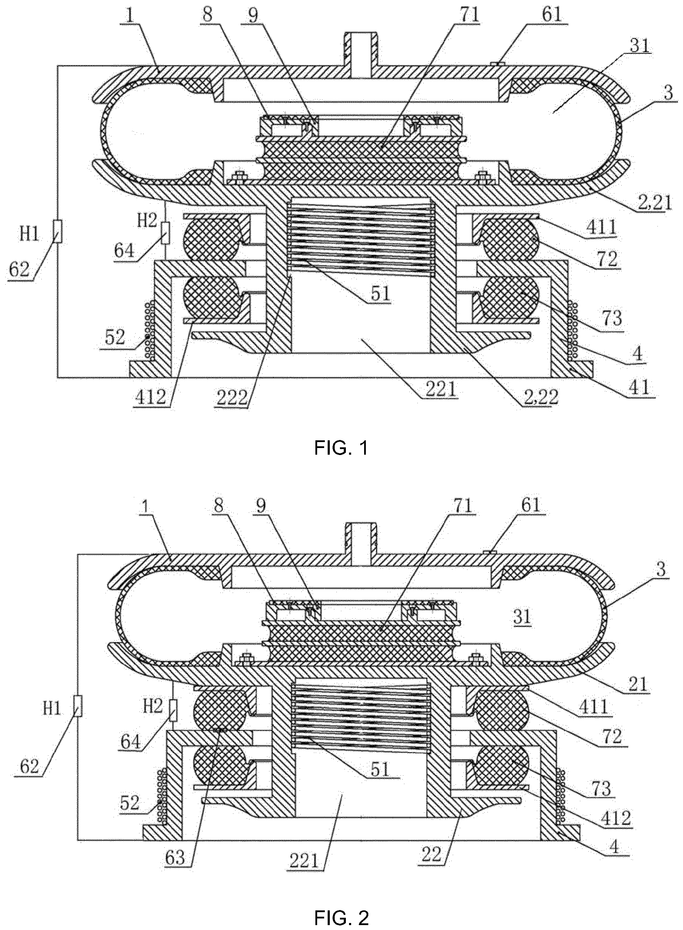

In the description of the present application, it should be noted that the terms "up", "down" and the like indicating orientation or positional relationship are based on the description of the orientation connected to the vehicle shown in Figure 1, merely for the convenience of describing the present application and the simplified description, but do not indicate or imply a devices or an element referred to must be of a particular orientation, constructed and operated in a particular orientation and therefore should not be construed as limiting the present application.

In the description of the present application, it should be noted that the terms "connect", "connecting" and "connected" should be understood in a broad sense unless otherwise clearly specified and limited. For example, they might be fixed connection, detachable connection, or integrated connection; might be direct connection or indirect connection through an intermediate medium, and might be internal connection of two elements. For those of ordinary skill in the art, the specific meanings of the above-mentioned terms in the present application can be understood under specific circumstances.

A first implementation of the present application provides an air spring, including:
an upper cover 1;
a lower cover 2, including:
   a cover plate 21, arranged opposite to the upper cover 1 at intervals; and
   a support part 22, connected below the cover plate 21;
a diaphragm 3, arranged between the cover plate 21 and the upper cover 1; the diaphragm 3 forming an air chamber 31 with the upper cover 1 and the cover plate 21;
a base 4, movably connected to the support part 22 up and down, for example, the base 4 is sleeved on the support part 22; and the base 4 being connected to a bogie, so that the air spring is located between a vehicle body and the bogie; and
an electromagnetic levitation module, including a first coil 51 and a second coil 52 that are able to be energized, wherein the first coil 51 is mounted on the support part 22, and the second coil 52 is arranged on the base 4; the first coil 51 and the second coil 52 after being energized are able to generate magnetic fields to form mutually repulsive or attractive electromagnetic forces; the current of the first coil 51 and/or the current of the second coil 52 are/is adjustable, so that the support part 22 and the base 4 are able to move relatively to each other to achieve anti-vibration effect.

More specifically, the air spring includes:
the upper cover 1;
the lower cover 2, including:
   the cover plate 21, arranged opposite to the upper cover 1 at intervals; and
   the support part 22, connected below the cover plate 21; and hollow interior of the support part 22 forming a first accommodating chamber 221 with the cover plate 21;
the diaphragm 3, arranged between the cover plate 21 and the upper cover 1; the diaphragm 3 forming the air chamber 31 with the upper cover 1 and the cover plate 21;
the base 4, sleeved outside the support part 22; and the base 4 being connected to the bogie;
the electromagnetic levitation module, including the first coil 51 and the second coil 52 that are able to be energized; wherein the first coil 51 is arranged in the first accommodating chamber 221; the second coil 52 is sleeved outside the base 4; and after being energized, the first coil 51 and the second coil 52 generate magnetic fields to form electromagnetic forces;
a detection module, including:
   a first load sensor 61, arranged on the upper cover 1 and configured to detect a vertical load F_{z1} borne by the air spring; and a first height sensor 62, configured to detect a height difference H1 between the upper cover 1 and a bottom of the base 4, as shown in FIG. 1; and
an electromagnetic control module, electrically connected with the electromagnetic levitation module and the detection module respectively; and the electromagnetic control module being configured to receive detection signals from the detection module and control the electromagnetic levitation module according to the detection signals.

According to the vertical loads before and after change and the height differences H1 before and after change detected by the detection module, the electromagnetic control module mainly adjusts the current magnitude or current direction of the first coil 51 and/or the second coil 52, or inflates or deflates the diaphragm 3, to counteract the upward or downward vibration caused by the change of the vertical load and the change of the height difference H1. Through logical calculation of the electromagnetic control module, the active anti-vibration function can be realized, and the vertical vibration of the vehicle body can be avoided to a certain extent.

More specifically, the electromagnetic control module includes at least one processor, a memory and at least one program, wherein the at least one program is stored in the memory and is configured to be executed by the at least one program; and the at least one program includes:
an instruction for receiving real-time acquired data and storing the data by the first load sensor 61 and the first height sensor 62;
an instruction for determining whether the vertical load F_{z1} and the height difference H1 are changed according to the received and stored data;
an instruction for calculating corresponding electromagnetic force change value according to the changes of the vertical load F_{z1} and the height difference H1; and
an instruction for adjusting the current magnitude or current direction of the first coil 51 and/or the second coil 52 according to the calculated electromagnetic force change value.

The electromagnetic control module may also include a computer readable storage medium having computer programs stored therein, wherein the programs include: an instruction for receiving real-time acquired data and storing the data by the first load sensor 61 and the first height sensor 62; an instruction for determining whether the vertical load F_{z1} and the height difference H1 are changed according to the received and stored data; an instruction for calculating corresponding electromagnetic force change value according to the changes of the vertical load F_{z1} and the height difference H1; and an instruction for adjusting the current magnitude or current direction of the first coil 51 and/or the second coil 52 according to the calculated electromagnetic force change value.

Specifically, with reference to FIG. 1, a groove 222 is arranged on an inner wall of the first accommodating chamber 221 in a circumferential direction, and the first coil 51 is arranged in the groove 222, so that the support part 22 can move with the first coil 51. A support portion 41 is provided on the bottom of the base 4, and the second coil 52 is sleeved outside the base 4 and located on the support portion 41, so that the support portion 41 can limit the second coil 52. In the present implementation, the vertical load borne by the air spring is basically borne by the mutually repulsive electromagnetic forces formed by the magnetic fields generated by the first coil 51 and the second coil 52 after being energized, or borne by the diaphragm 3. Since the electromagnetic forces are in series with the diaphragm 3, the vertical load borne by the electromagnetic forces is the same as that borne by the diaphragm 3. It is easily understood that the first load sensor 61 is a pressure sensor. When the vehicle body is stationary, the vertical load detected by the first load sensor 61 is the dead weight of the vehicle body; and, when the vehicle body is moving, the detected load is the dead weight of the vehicle body and the dynamic load generated by the vehicle body during vibration (which may be referred to as the dead weight and the dynamic load of the vehicle body, respectively). Specifically, when the bogie vibrates up and down, the position of the base 4 will be changed, so that the height difference H1 is changed. The position change of the base 4 will lead to the strength change in the magnetic field and the change of the magnetic force at the position of the first coil 51, which tends to cause the vertical vibration of the air spring; and at this time, the load detected by the first load sensor 61 is the dead weight and the dynamic load of the vehicle body. To eliminate the load change borne by the first coil 51, the electromagnetic control module obtains the generated dynamic load by receiving and calculating the load F_{z1} detected by the first load sensor 61, and controls the electromagnetic levitation module by changing the strength of the magnetic field at the position of the first coil 51 through adjusting the current magnitude of the second coil 52 (the current direction can be adjusted as required), or by changing the electromagnetic force suffered by the first coil 51 through adjusting the current magnitude of the first coil 51; so that the electromagnetic force of the magnetic field is increased or decreased to counteract the dynamic load, and the position of the first coil 51 finally remains unchanged. Thus, the air spring will not vibrate vertically, and the vehicle body will not vibrate vertically. That is, after the bogie vibrates, the altitude of the vehicle body is still almost the same as the altitude of the vehicle body before vibration, so that passengers will not feel vibration. Meanwhile, since the inflatable diaphragm 3 in the upper portion of the air spring has anti-vibration and damping effects, the instantaneous vibration of the vehicle body will not be caused during the moment of data acquisition and transmission of the detection module, and the logic calculation and instruction issuance of the electromagnetic control module.

The influence of the bogie vibration on the air spring and the vehicle body will be described below, wherein the vehicle body is located above the upper cover 1, the bogie is located below the base 4, and wheels are located below the bogie and come into contact with the ground. When the wheels encounter depressions during movement, the wheels will take the bogie and the base 4 to move down, so that the height difference H1 between the base 4 and the cover plate 21 is increased and the dynamic load is reduced. During the downward movement, the second coil 52 moves down with the base 4, so that the magnetic force provided to the first coil 51 is weakened and the first coil 51 tends to go down. Assuming the first coil 51 directly goes down, the first coil 51 will inevitably take the lower cover 2 and the upper cover 1 to go down, so that the vehicle body also goes down, and passengers will feel down bumps. To avoid the going down of the vehicle body, when the detection module detects the changes of the height difference H1 and the dynamic load, through the logical calculation and the instruction transmission, the electromagnetic control module can control the second coil 52 to increase the current and increase the strength of the magnetic field at the first coil 51 so that the first coil 51 remains at the original position and does not go down, or the electromagnetic control module can control the first coil 51 to increase the current and increase the generated electromagnetic force, so that the first coil 51 can also remain at the original position; thus it will not take the lower cover 2, the upper cover 1 and the vehicle body to go down, avoiding bumps. Similarly, when the wheels encounter protrusions during movement, the wheels will drive the bogie and the base 4 to move upward, so that the height difference H1 between the base 4 and the cover plate 21 is decreased and the dynamic load is increased. During the upward movement, the second coil 52 moves upward with the base 4, so that the magnetic force provided to the first coil 51 is enhanced and the first coil 51 tends to go up. Assuming the first coil 51 directly goes up along, the first coil 51 will inevitably take the lower cover 2 and the upper cover 1 to go up, so that the vehicle body also goes up, and passengers will feel up bumps. To avoid the going up of the vehicle body, when the detection module detects the changes of the height difference H1 and the dynamic load, through the logical calculation and the instruction transmission, the electromagnetic control module can control the second coil 52 to decrease the current and decrease the strength of the magnetic field at the first coil 51 so that the first coil 51 remains at the original position and does not go up, or the electromagnetic control module can control the first coil 51 to decrease the current and decrease the generated electromagnetic force, so that the first coil 51 can also remain at the original position; thus it will not take the lower cover 2, the upper cover 1 and the vehicle body to go up, avoiding bumps. In the above two ways, when the wheels and the bogie are bumped, the vehicle body can be remained almost at the same altitude, and passengers will not feel any bump.

The air spring can also be designed safety in a failure mode by configuring an auxiliary spring. As shown in FIG. 2, the auxiliary spring includes a first rubber pad 71 which is arranged in the air chamber 31 and detachably fixed to the cover plate 21. Specifically, the first rubber pad 71 may be fixedly mounted on the cover plate 21 through bolts. A support seat 9 is connected above the first rubber pad 71, and a friction piece 8 is arranged above the support seat 9, wherein the friction piece 8 is made of a high-molecular material, for example, polytetrafluoroethylene, ultra-high molecular weight polyethylene, etc. The friction coefficient of the friction piece 8 is far less than that of the first rubber pad 71. In an emergency state where the diaphragm 3 is deflated, the first rubber pad 71 bears the load alone, thereby providing a certain anti-vibration effect. The arrangement of the friction piece 8 improves the wear resistance of the first rubber pad 71, and ensures that the air spring can still slide horizontally due to the small friction force of the friction piece 8 when the diaphragm is deflated.

With continued reference to FIG. 2, the auxiliary spring may further include a second rubber pad 72; a first mounting member 411 is arranged on the support part 22, a second accommodating chamber is formed between the base 4 and the first mounting member 411, and the second rubber pad 72 is arranged in the second accommodating chamber. Preferably, the first mounting member 411 is arranged above the base 4, the first mounting member 411 is connected to the cover plate 21, and the second rubber pad 72 is arranged in the second accommodating chamber and comes into contact with the first mounting member 411 and the base 4, respectively. The detection module further includes a second load sensor 63 and a second height sensor 63. The second load sensor 63 is a pressure sensor which is arranged on the base 4 and comes into contact with the second rubber pad 72. The second height sensor 64 is configured to measure the height difference H2 between the cover plate 21 and an upper portion of the base 4. Optionally, the second rubber pad 72 is prepressed between the first mounting member 411 and the base 4, so as to bear the vertical load together with the diaphragm 3 and the electromagnetic levitation module in the serial connection direction.

The second rubber pad 72 is connected to the cover plate 21 through the first mounting member 411; therefore, in a normal operating state, the load are borne by the electromagnetic force provided by the electromagnetic levitation module, by the diaphragm 3 and by the second rubber pad 72 jointly. Since the second rubber pad 72 shares part of the vertical load, the required electromagnetic force of the electromagnetic levitation module may be smaller, so that the turn number or the current magnitude of the first coil 51 and/or the second coil 52 can be decreased, and the electromagnetic levitation module is controlled more conveniently and accurately. In the present implementation, the load F_{z2} detected by the second load sensor 63 is also the dead weight and the dynamic load of the vehicle body, and the second height sensor 64 detects the height difference H2 between the cover plate 21 and the base 4. When the bogie vibrates up and down to change the position of the base 4, the height difference H2 will also be changed, and the strength of the magnetic field at the position of the first coil 51 will be changed. Since the electromagnetic force suffered by the first coil 51 is changed, the vertical vibration of the air spring will be caused. Similarly, the electromagnetic control module obtains the generated dynamic load by receiving and calculating the load F_{z2} detected by the second load sensor 63, and controls the electromagnetic levitation module by changing the electromagnetic force suffered by the first coil 51 through adjusting the current magnitude of the second coil 52 or the first coil 51, so as to counteract the generated dynamic load, so that the vehicle body does not vibrate vertically. That is, the altitude of the vehicle body almost remains unchanged. The analysis principle is similar to that in the preceding implementation and will not be repeated here.

Further, the auxiliary spring may further include a third rubber pad 73; a second mounting member 412 is arranged on the support part 22, the second mounting member 412 is arranged below the base 4, a third accommodating chamber is formed between the second mounting member 412 and the base 4, and the third rubber pad 34 is arranged in the third accommodating chamber.

The arrangement mode of the auxiliary spring including for example the first rubber pad 71, the second rubber pad 72 and the third rubber pad 73 may be applied to the safety design in the failure mode. When the air spring is in an extreme failure state where the diaphragm 3 is deflated and the electromagnetic control module is also failed (for example, the electromagnetic force is insufficient), the load is borne by the first rubber pad 71 and the second rubber pad 72, similar to the operation mode of a conventional air spring. When the vehicle needs to run at a limited speed, since the first rubber pad 71 and the second rubber pad 72 operate in series, the rigidity is less than that of the conventional rubber pad, and the anti-vibration performance is better than that of the conventional rubber pad. The third rubber pad 73 plays a role in limiting the vertical upward displacement. When the electromagnetic control module is in a failure mode (that is, the electromagnetic force is too large), the third rubber pad 73 can limit the air spring from an excessive vertical displacement, and has an upward vertical stopping function. When the diaphragm 3 is deflated and the electromagnetic control module is failed, the load is borne by both the first rubber pad 71 and the third rubber pad 73. There is a safety design in the failure mode, and the running reliability of the vehicle is improved. In addition, the first rubber pad 71 and the third rubber pad 73 do not bear any load in the normal operation state, and bear the load only in an emergency state, thereby greatly improving the reliability and reducing the difficulty in design and manufacturing. Meanwhile, for the second rubber pad 72 in the normal operation state, the vertical load borne by the second rubber pad 71 in the operation state can be controlled via controlling the electromagnetic force of the magnetic field by the electromagnetic control module, so that a small load change can be realized in the whole operation state. Accordingly, the service life of the second rubber pad 72 is greatly improved, and the failure rate is reduced.

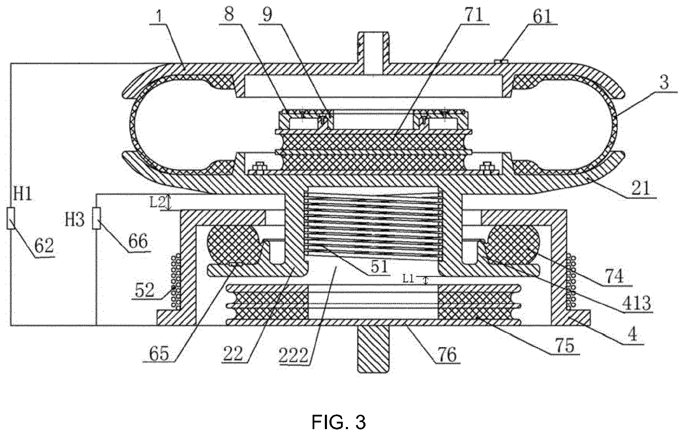

Further, as an alternative implementation of the above second rubber pad 72 and third rubber pad 73, with reference to FIG. 3, in this implementation, the detection module further includes a third load sensor 65 and a third height sensor 66. A third mounting member 413 is arranged on the support part 22 and located below the base 4. The third load sensor 65 is arranged on the third mounting member 413 and comes into contact with the fourth rubber pad 74. The third height sensor 66 is configured to measure the height difference H3 between the cover plate 21 and the bottom of the base 4. The auxiliary spring further includes a fifth rubber pad 75 which is arranged below the support part 22 at intervals. The fifth rubber pad 75 is connected with the bogie through a mounting seat 76. The present implementation has all the functions of the above implementations.

Furthermore, the third mounting member 413 is fixedly mounted on the support part 22; and a first distance L1 between the support part 22 and the fifth rubber pad 75 is less than a second distance L2 between the base 4 and the cover plate 21. With such a configuration, the fifth rubber pad 75 can play a role in anti-vibration in the vertical direction when the electromagnetic module is failed. In addition, the upper portion and lower portion of the fourth rubber pad 74 may be fixedly mounted on the base 4 and the third mounting member 413, respectively, for example, being connected to them through bolts or being directly vulcanized thereon, thereby achieving better stability.

Further, in the air spring, the existing height valve may be replaced by the first height sensor 62 to control the inflation or deflation of the diaphragm 3 of the air spring. Specifically, the electromagnetic control module inflates or deflates the air spring by using the height difference H1 measured by the first height sensor 62 when the vertical load detected by the first load sensor 61 is ensured to remain unchanged. When it is detected that the height difference H1 becomes smaller, it is necessary to inflate the diaphragm 3 of the air spring. This function is particularly applied to vehicle debugging. Since different vehicles have different weights and the same vehicle has different weights at different positions, the chassis of the vehicles cannot be in the same horizontal plane. In prior art, adjustment pads are used for leveling, but with undesirable adjustment effect. When the vertical load remains unchanged, the air spring is inflated or deflated by using the height difference H1 measured by the first height sensor 62 and the control of the electromagnetic control module, so that the height of the air spring can be adjusted accurately, and the height of four corners of the vehicle can thus be adjusted accurately.

Further, preferably, more intelligent control of the air spring can be realized by adding other types of sensors and by signal acquisition, data processing, logical judgment and other functions. The acquired data can also be accumulated as the data of the operation conditions of the product and used for product fault analysis and realizing early fault warning and other functions.

A second implementation of the present application provides a rail vehicle, including the air spring described in any one of the above implementations, wherein the upper cover 1 of the air spring is connected to the vehicle body, and the base 4 is connected to the bogie.

In conclusion, in the air spring and the rail vehicle provided by the present application, the active anti-vibration function can be realized through the intelligent logical control of the electromagnetic control module. When a vehicle runs on straight rails or runs across a curve, the height of the air spring can be quickly adjusted as required to satisfy the performance requirements of vehicle dynamics. For example, when the vehicle runs across a curve, the air springs on two sides of the bogie are adjusted to different heights to tilt the vehicle body so as to provide a centripetal force, so that the vehicle can run across the curve quickly. In addition, the air spring has the safety design function in the failure mode and has the advantage of improving the mounting, debugging and height control of the vehicle, and the used auxiliary spring has high reliability, thereby ensuring the basically unchanged performance in the whole service life and the characteristic of low failure rate.

The embodiments are only described as preferred embodiments of the present application, and are not intended to limit the scope of the present application.

## Claims

1. An air spring, including:
an upper cover (1);
a lower cover (2), including a cover plate (21) arranged opposite to the upper cover (1) at intervals and a support part (22) connected below the cover plate (21); a hollow interior of the support part (22) and the cover plate (21) forming a first accommodating chamber (221);
a diaphragm (3), arranged between the cover plate (21) and the upper cover (1) to form an air chamber (31);
a base (4), movably connected and sleeved outside the support part (22);
an electromagnetic levitation module, including a first coil (51) and a second coil (52) which are able to be energized, wherein the first coil (51) is mounted on the support part, being arranged in the first accommodating chamber (221), and the second coil (52) is arranged on the base, being sleeved outside the base (4); the first coil (51) and the second coil (52) generate magnetic fields to form electromagnetic forces after being energized; and the current of the first coil (51) and/or the second coil (52) are/is adjustable;
a detection module, including a first load sensor (61) arranged on the upper cover (1) and configured to detect vertical load borne by the air spring, and a first height sensor (62) configured to detect a height difference between the upper cover (1) and a bottom of the base (4); and
an electromagnetic control module, electrically connected with the electromagnetic levitation module and the detection module respectively, and configured to receive detection signals from the detection module and control the electromagnetic levitation module according to the detection signals.

2. The air spring according to claim 1, wherein, further includes an auxiliary spring, the auxiliary spring includes a first rubber pad (71) arranged in the air chamber (31), and the first rubber pad (71) is detachably fixed to the cover plate (21).

3. The air spring according to claim 2, wherein, the auxiliary spring further includes a second rubber pad (72); a first mounting member (411) is arranged on the support part (22), a second accommodating chamber is formed between the base (4) and the first mounting member (411), and the second rubber pad (72) is arranged in the second accommodating chamber.

4. The air spring according to claim 3, wherein, the detection module further includes a second load sensor (63) and a second height sensor (64); the first mounting member (411) is arranged above the base (4), and the first mounting member (411) is connected to the cover plate (21); the second load sensor (63) is arranged on the base (4) and comes into contact with the second rubber pad (72); and, the second height sensor (64) is configured to measure a height difference between the cover plate (21) and an upper portion of the base (4).

5. The air spring according to claim 3 or 4, wherein, the auxiliary spring further includes a third rubber pad (73); a second mounting member (412) is arranged on the support part (22); the second mounting member (412) is arranged below the base (4) and forms a third accommodating chamber with the base (4); and, the third rubber pad (73) is arranged in the third accommodating chamber.

6. The air spring according to any one of claims 1-4, wherein, the detection module further includes a third load sensor (65) and a third height sensor (66); a third mounting member (413) is arranged on the support part (22) and located below the base (4); a fourth rubber pad (74) is located between the base (4) and the third mounting member (413); the third load sensor (65) is arranged on the third mounting member (413) and comes into contact with the fourth rubber pad (74); and, the third height sensor (66) is configured to measure a height difference between the cover plate (21) and the bottom of the base (4).

7. The air spring according to claim 6, wherein, the auxiliary spring further includes a fifth rubber pad (75) arranged below the support part (22) at intervals; and, the fifth rubber pad (75) is connected to a bogie through a mounting seat (76).

8. The air spring according to any one of claims 2-5, wherein, a support seat (9) is connected above the first rubber pad (71), and a friction piece (8) is arranged above the support seat (9).

9. A rail vehicle, including the air spring according to any one of claims 1-8.

## Patentansprüche

1. Luftfeder, umfassend:
eine obere Abdeckung (1);
eine untere Abdeckung (2), umfassend eine Abdeckplatte (21), die in Abständen gegenüber der oberen Abdeckung (1) angeordnet ist, und ein Stützteil (22), das unterhalb der Abdeckplatte (21) angeschlossen ist; wobei ein hohler Innenraum des Stützteils (22) und die Abdeckplatte (21) eine erste Aufnahmekammer (221) bilden;
eine Membran (3), die zwischen der Abdeckplatte (21) und der oberen Abdeckung (1) angeordnet ist, um eine Luftkammer (31) zu bilden;
eine Basis (4), die beweglich angeschlossen und außerhalb des Stützteils (22) aufgesteckt ist;
ein elektromagnetisches Schwebemodul, umfassend eine erste Spule (51) und eine zweite Spule (52), die unter Strom gesetzt werden können, wobei die erste Spule (51) an dem Stützteil angebracht ist und in der ersten Aufnahmekammer (221) angeordnet ist, und die zweite Spule (52) an der Basis angeordnet ist und außerhalb der Basis (4) aufgesteckt ist; die erste Spule (51) und die zweite Spule (52) Magnetfelder erzeugen, um nach der Erregung elektromagnetische Kräfte zu bilden; und der Strom der ersten Spule (51) und/oder der zweiten Spule (52) einstellbar ist/sind;
ein Erfassungsmodul, umfassend einen ersten Lastsensor (61), der an der oberen Abdeckung (1) angeordnet und so konfiguriert ist, dass er die von der Luftfeder getragene vertikale Last erfasst, und einen ersten Höhensensor (62), der so konfiguriert ist, dass er einen Höhenunterschied zwischen der oberen Abdeckung (1) und einem Boden der Basis (4) erfasst; und
ein elektromagnetisches Steuermodul, das elektrisch mit dem elektromagnetischen Schwebemodul bzw. dem Erfassungsmodul verbunden und so konfiguriert ist, dass es Erfassungssignale vom Erfassungsmodul empfängt und das elektromagnetische Schwebemodul entsprechend den Erfassungssignalen steuert.

2. Luftfeder nach Anspruch 1, wobei sie ferner eine Hilfsfeder umfasst, die Hilfsfeder ein erstes Gummipolster (71) umfasst, das in der Luftkammer (31) angeordnet ist, und das erste Gummipolster (71) abnehmbar an der Abdeckplatte (21) befestigt ist.

3. Luftfeder nach Anspruch 2, wobei die Hilfsfeder ferner ein zweites Gummipolster (72) umfasst; ein erstes Befestigungselement (411) an dem Stützteil (22) angeordnet ist, eine zweite Aufnahmekammer zwischen der Basis (4) und dem ersten Befestigungselement (411) gebildet ist und das zweite Gummipolster (72) in der zweiten Aufnahmekammer angeordnet ist.

4. Luftfeder nach Anspruch 3, wobei das Erfassungsmodul ferner einen zweiten Lastsensor (63) und einen zweiten Höhensensor (64) umfasst; das erste Befestigungselement (411) über der Basis (4) angeordnet ist und das erste Befestigungselement (411) mit der Abdeckplatte (21) verbunden ist; der zweite Lastsensor (63) an der Basis (4) angeordnet ist und mit dem zweiten Gummipolster (72) in Kontakt kommt; und der zweite Höhensensor (64) so konfiguriert ist, dass er einen Höhenunterschied zwischen der Abdeckplatte (21) und einem oberen Abschnitt der Basis (4) misst.

5. Luftfeder nach Anspruch 3 oder 4, wobei die Hilfsfeder ferner ein drittes Gummipolster (73) umfasst; ein zweites Befestigungselement (412) an dem Stützteil (22) angeordnet ist; das zweite Befestigungselement (412) unterhalb der Basis (4) angeordnet ist und mit der Basis (4) eine dritte Aufnahmekammer bildet; und das dritte Gummipolster (73) in der dritten Aufnahmekammer angeordnet ist.

6. Luftfeder nach einem der Ansprüche 1-4, wobei das Erfassungsmodul ferner einen dritten Lastsensor (65) und einen dritten Höhensensor (66) umfasst; ein drittes Befestigungselement (413) an dem Stützteil (22) angeordnet und unterhalb der Basis (4) positioniert ist; ein viertes Gummipolster (74) zwischen der Basis (4) und dem dritten Befestigungselement (413) angeordnet ist; der dritte Lastsensor (65) an dem dritten Befestigungselement (413) angeordnet ist und mit dem vierten Gummipolster (74) in Kontakt kommt; und der dritte Höhensensor (66) so konfiguriert ist, dass er einen Höhenunterschied zwischen der Abdeckplatte (21) und dem Boden der Basis (4) misst.

7. Luftfeder nach Anspruch 6, wobei die Hilfsfeder ferner ein fünftes Gummipolster (75) umfasst, das in Abständen unter dem Stützteil (22) angeordnet ist; und das fünfte Gummipolster (75) über einen Befestigungssitz (76) mit einem Drehgestell verbunden ist.

8. Luftfeder nach einem der Ansprüche 2-5, wobei ein Stützsitz (9) über dem ersten Gummipolster (71) angeschlossen ist und ein Reibstück (8) über dem Stützsitz (9) angeordnet ist.

9. Schienenfahrzeug, umfassend die Luftfeder nach einem der Ansprüche 1-8.

## Revendications

1. Ressort pneumatique incluant :
un recouvrement supérieur (1) ;
un recouvrement inférieur (2), incluant une plaque de recouvrement (21) agencée à l'opposé du recouvrement supérieur (1) à des intervalles et une partie de support (22) raccordée sous la plaque de recouvrement (21) ; un intérieur creux de la partie de support (22) et la plaque de recouvrement (21) formant une première chambre de logement (221) ;
un diaphragme (3), agencé entre la plaque de recouvrement (21) et le recouvrement supérieur (1) pour former une chambre pneumatique (31) ;
une base (4), raccordée mobile et manchonnée à l'extérieur de la partie de support (22) ;
un module de lévitation électromagnétique, incluant une première bobine (51) et une deuxième bobine (52) qui peuvent être alimentées, dans lequel la première bobine (51) est montée sur la partie de support, étant agencée dans la première chambre de logement (221), et la deuxième bobine (52) étant agencée sur la base, étant manchonnée à l'extérieur de la base (4) ; la première bobine (51) et la deuxième bobine (52) génèrent des champs magnétiques pour former des forces électromagnétiques après avoir été alimentées ; et le courant de la première bobine (51) et/ou de la deuxième bobine (52) est réglable ;
un module de détection, incluant un premier capteur de charge (61) agencé sur le recouvrement supérieur (1) et configuré pour détecter une charge verticale portée par le ressort pneumatique, et un premier capteur de hauteur (62) configuré pour détecter une différence de hauteur entre le recouvrement supérieur (1) et un fond de la base (4) ; et
un module de commande électromagnétique, connecté électriquement au module de lévitation électromagnétique et au module de détection respectivement, et configuré pour recevoir des signaux de détection à partir du module de détection et commander le module de lévitation électromagnétique selon les signaux de détection.

2. Ressort pneumatique selon la revendication 1, dans lequel, inclut en outre un ressort auxiliaire, le ressort auxiliaire inclut un premier tampon en caoutchouc (71) agencé dans la chambre pneumatique (31), et le premier tampon en caoutchouc (71) est fixé détachable à la plaque de recouvrement (21).

3. Ressort pneumatique selon la revendication 2, dans lequel le ressort auxiliaire inclut en outre un deuxième tampon en caoutchouc (72) ; un premier élément de montage (411) est agencé sur la partie de support (22), une deuxième chambre de logement est formée entre la base (4) et le premier élément de montage (411), et le deuxième tampon en caoutchouc (72) est agencé dans la deuxième chambre de logement.

4. Ressort pneumatique selon la revendication 3, dans lequel le module de détection inclut en outre un deuxième capteur de charge (63) et un deuxième capteur de hauteur (64) ; le premier élément de montage (411) est agencé au-dessus de la base (4), et le premier élément de montage (411) est raccordé à la plaque de recouvrement (21) ; le deuxième capteur de charge (63) est agencé sur la base (4) et entre en contact avec le deuxième tampon en caoutchouc (72) ; et le deuxième capteur de hauteur (64) est configuré pour mesurer une différence de hauteur entre la plaque de recouvrement (21) et une portion supérieure de la base (4).

5. Ressort pneumatique selon la revendication 3 ou 4, dans lequel le ressort auxiliaire inclut en outre un troisième tampon en caoutchouc (73) ; un deuxième élément de montage (412) est agencé sur la partie de support (22) ; le deuxième élément de montage (412) est agencé sous la base (4) et forme une troisième chambre de logement avec la base (4) ; et, le troisième tampon en caoutchouc (73) est agencé dans la troisième chambre de logement.

6. Ressort pneumatique selon l'une quelconque des revendications 1 à 4, dans lequel le module de détection inclut en outre un troisième capteur de charge (65) et un troisième capteur de hauteur (66) ; un troisième élément de montage (413) est agencé sur la partie de support (22) et situé sous la base (4) ; un quatrième tampon en caoutchouc (74) est situé entre la base (4) et le troisième élément de montage (413) ; le troisième capteur de charge (65) est agencé sur le troisième élément de montage (413) et entre en contact avec le quatrième tampon en caoutchouc (74) ; et le troisième capteur de hauteur (66) est configuré pour mesurer une différence de hauteur entre la plaque de recouvrement (21) et le fond de la base (4).

7. Ressort pneumatique selon la revendication 6, dans lequel le ressort auxiliaire inclut en outre un cinquième tampon en caoutchouc (75) agencé sous la partie de support (22) à des intervalles ; et, le cinquième tampon en caoutchouc (75) est raccordé à un bogie par l'intermédiaire d'un siège de montage (76).

8. Ressort pneumatique selon l'une quelconque des revendications 2 à 5, dans lequel un siège de support (9) est raccordé au-dessus du premier tampon en caoutchouc (71), et une pièce de frottement (8) est agencée au-dessus du siège de support (9).

9. Véhicule ferroviaire, incluant le ressort pneumatique selon l'une quelconque des revendications 1 à 8.
